# EUROPEAN PATENT SPECIFICATION

(11) **EP 3 718 986 B1**
(45) Date of publication and mention of the grant of the patent: **30.03.2022**
(21) Application number: 18889198.0
(22) Date of filing: 11.05.2018
(51) Int. Cl.: C04B 28/14, C04B 24/26, C04B 24/28, C04B 38/10, C04B 40/00, C04B 111/00, B01D 53/88, B01D 53/04, B01J 20/10, B01J 20/20, B01J 20/24, B01J 20/26, B01J 20/28, B01J 20/30, E04C 2/04

(54) **PAPER-LAYERED GYPSUM BOARD FOR REMOVING FORMALDEHYDE AND PREPARATION METHOD THEREOF**
PAPIERBESCHICHTETE GIPSPLATTE ZUR ENTFERNUNG VON FORMALDEHYD UND HERSTELLUNGSVERFAHREN DAFÜR
PLAQUE DE PLÂTRE REVÊTUE DE PAPIER POUR ÉLIMINER LE FORMALDÉHYDE ET SON PROCÉDÉ DE PRÉPARATION

(30) Priority: 14.12.2017 CN 201711335644
(43) Date of publication of application: 07.10.2020
(73) Proprietor: Beijing New Building Materials Public Limited Company, Beijing 102209 (CN)
(72) Inventor: CHEN, Hongxia, Beijing 102209 (CN); WU, Fade, Beijing 102209 (CN); LI, Fan, Beijing 102209 (CN); ZHOU, Mengwen, Beijing 102209 (CN); WANG, Xia, Beijing 102209 (CN); ZHANG, Xiaofei, Beijing 102209 (CN); JIA, Yanyan, Beijing 102209 (CN); BAI, Fenghua, Beijing 102209 (CN)
(74) Representative: Murgitroyd & Company
(86) International application number: PCT/CN2018/086494
(87) International publication number: WO 2019/114187

(56) References cited:
- CN-A- 101 549 980
- CN-A- 102 343 134
- CN-A- 102 872 715
- CN-Y- 201 158 913
- US-A1- 2007 138 671
- US-A1- 2016 332 913

## Description

### Technical Field

The present invention relates to, but is not limited to, the field of building materials, in particular to a paper-layered gypsum board for removing formaldehyde and a preparation method thereof.

### Background

With the emphasis on environmental protection and health, the demand for functional gypsum boards is increasing. Formaldehyde may be released from decoration materials or furniture accessories. Formaldehyde has become one of the main pollutants in decoration of our country. Formaldehyde is harmful to the human body and has the long incubation period. It is known as the "first killer of indoor pollution". Formaldehyde is the main cause of neonatal deformity, childhood leukemia, and adolescents' memory and mental decline. It has been identified by WHO (World Health Organization) as "Carcinogenic and teratogenic substances". Long-term exposure to low-dose formaldehyde can cause chronic poisoning and cause diseases of the respiratory system, nervous system, reproductive system, or the like. Therefore, the harm of formaldehyde to humans cannot be ignored. Since the formaldehyde release cycle is 3-15 years, a gypsum board for removing formaldehyde needs to achieve a long-term and effective formaldehyde-removing effect.

Among the existing gypsum boards for removing formaldehyde, some rely on the adsorption substance, but physical adsorption is not stable for the adsorption of formaldehyde and has no obvious target, many components in indoor air will compete with formaldehyde for adsorption, and there is the problem of adsorption saturation. Weak adsorption may cause formaldehyde to be released, and the effect is difficult to be guaranteed. The degradation of formaldehyde by adding a photocatalyst to a gypsum board requires more external conditions, for example, ultraviolet light is required to stimulate the catalytic activity, and indoor humidity is also required. Therefore, in actual applications, the formaldehyde-removing effect is difficult to be guaranteed.

Therefore, there is a need for a gypsum board for removing formaldehyde that can perform long-term and effective elimination of indoor formaldehyde and have the mechanical properties of the gypsum board itself unaffected.

Related technologies are known from US 2016/332913 A1 which relates to a gypsum plaster-based material containing casein and activated carbon and in particular to a paster-based material that is capable of reducing the amount of volatile organic compounds in the ambient air, in particular a plasterboard intended for the interior fitting of dwellings.

### Summary

The present invention aims to provide a paper-layered gypsum board for removing formaldehyde as defined in independent claim 1. Preferred emodiments are defined in the dependent claims. By addition of a special agent for removing formaldehyde to the formula, the gypsum board can effectively reduce the indoor formaldehyde concentration and maintain a formaldehyde-removing effect for a long time, and the paper-faced gypsum board for removing formaldehyde also has excellent mechanical properties.

A paper-layered gypsum board for removing formaldehyde provided by the present application includes two layers of cover papers and a gypsum board between the two layers of cover papers; wherein for 100 parts by weight of calcined gypsum powder, the gypsum board includes 2-10 parts by weight of an agent for removing formaldehyde.

The preparation method of the agent for removing formaldehyde according to the invention includes following steps of:
adding 10-20 parts by weight of coal powder and 5-10 parts by weight of polymeric amines into 15-25 parts by weight of silica sol, and stirring and mixing; and heating to 40-60°C, adding 15-20 parts by weight of polypeptide and 10-15 parts by weight of polytetrafluoroethylene emulsion, adjusting pH to a value of 7.5-8.0, and stirring for 10-20 min at 1800 r/min to obtain the agent for removing formaldehyde.

According to the invention, the polypeptide includes one or more of antimicrobial peptide and casein phosphopeptide; and the polymeric amines include one or more of polyallylamine, dendritic polyamide and hyperbranched polyamide.

The polypeptide is a composition of antimicrobial peptide and casein phosphopeptide, and the weight ratio of the antimicrobial peptide to the casein phosphopeptide is 1: 4 to 1: 2.

The weight ratio of the antimicrobial peptide to the casein phosphopeptide is 1: 3.

For 100 parts by weight of calcined gypsum powder, the gypsum board further includes the following components:

| | |
|---|---|
| enhancer | 0-1 part by weight; |
| water reducing agent | 0-2.5 parts by weight; |
| modified starch | 0.02-1 part by weight; |
| foaming agent | 0.01-1 part by weight; |
| water | 70-90 parts by weight. |

The gypsum board for removing formaldehyde includes following components, wherein content of each component is:

| | |
|---|---|
| calcined gypsum powder | 100 parts by weight; |
| agent for removing formaldehyde | 5 parts by weight; |
| enhancer | 0.6 part by weight; |
| water reducing agent | 1.5 parts by weight; |
| modified starch | 0.5 part by weight; |
| foaming agent | 0.5 part by weight; |
| water | 78 parts by weight. |

The gypsum board for removing formaldehyde includes following components, wherein content of each component is:

| | |
|---|---|
| calcined gypsum powder | 100 parts by weight; |
| agent for removing formaldehyde | 8 parts by weight; |
| water reducing agent | 1.5 parts by weight; |
| modified starch | 1 part by weight; |
| foaming agent | 0.8 part by weight; |
| water | 72 parts by weight. |

According to another aspect of the present invention, a preparation method of a paperlayered gypsum board for removing formaldehyde as defined in independent claim 7 is provided. The method includes: mechanically stirring predetermined parts by weight of calcined gypsum powder, an agent for removing formaldehyde, an enhancer, wherein the enhancer is polymer fiber or mineral fiber, a water reducing agent, and modified starch, and feeding into a mixer; adding a predetermined part by weight of a foaming agent to water, and feeding the mixed solution into the mixer after being foamed by a foaming system; thoroughly stirring raw materials by the mixer to obtain a uniform slurry, continuously pouring between the two layers of cover papers, and extrusion molding to obtain a wet gypsum board; and solidifying, cutting, drying and sawing the wet gypsum board to obtain the paperlayered gypsum board for removing formaldehyde.

According to the present invention, the paperlayered gypsum board for removing formaldehyde includes two layers of cover papers and a gypsum board between the two layers of cover papers; wherein for 100 parts by weight of calcined gypsum powder, the gypsum board includes 2-10 parts by weight of an agent for removing formaldehyde.

A preparation method of the agent for removing formaldehyde includes following steps of: adding 10-20 parts by weight of coal powder and 5-10 parts by weight of polymeric amines into 15-25 parts by weight of silica sol, and stirring and mixing; and heating to 40-60°C, adding 15-20 parts by weight of polypeptide and 10-15 parts by weight of polytetrafluoroethylene emulsion, adjusting pH to a value of 7.5-8.0 by using sodium dihydrogen phosphate or sodium bicarbonate according to the actual situation, and stirring for 10-20 min at 1800 r/min to obtain the agent for removing formaldehyde.

For a paper-layered gypsum board for removing formaldehyde, when the substance that can react with formaldehyde is directly applied to a gypsum slurry or gypsum powder, the formaldehyde-removing effect will be greatly reduced. In the present invention, coal powder, polymeric amines and silica sol are stirred and mixed, so that the polymeric amines can be relatively firmly fixed on the adsorption unit formed by the coal powder and the silica sol. Heating, adding polypeptide and polytetrafluoroethylene emulsion, and stirring at high speed is to form units for removing formaldehyde which are easily dispersed in gypsum slurry to ensure uniform formaldehyde-removing effect. It should be pointed out that the pH value needs to be adjusted to 7.5-8.0, which will greatly improve the reaction efficiency of polypeptide and polymeric amines with formaldehyde in the gypsum board.

The polypeptide includes one or more of antimicrobial peptide and casein phosphopeptide; and the polymeric amines include one or more of polyallylamine, dendritic polyamide and hyperbranched polyamide.

Polypeptide is chosen from antimicrobial peptide and casein phosphopeptide with high biological activity, which are easy to react with formaldehyde to degrade formaldehyde. The weight ratio of the antimicrobial peptide to the casein phosphopeptide is 1: 4 to 1: 2, preferably 1:3.

The weight ratio of polyallylamine, dendritic polyamide and hyperbranched polyamide is (0.1-2): (0.2-8): (0.1-6), preferably 1: 4: 2. Polymeric amines have large molecular weight, active properties, and good thermal stability, and are easy to react with formaldehyde while generated products are non-toxic and stable. According to the present invention, polymeric amines comprising one or more of dendiitic polyamide and hyperbranched polyamide are selected because of many terminal amino groups of the polymeric amines and a better formaldehyde-removing effect achieved under the condition that the addition amount of the polymeric amines to the gypsum board is a bit less. The agent for removing formaldehyde can simultaneously perform a setting retarding effect on the gypsum, so as to ensure the slurry flow performance during the forming of the gypsum board and ensure better controllability of the production of the gypsum board.

In addition, the paper-layered gypsum board for removing formaldehyde further includes following components: 0.02-1 part by weight of specific modified starch, 0-1 part by weight of an enhancer, 0-2.5 parts by weight of a water reducing agent, 0.01-1 parts by weight of a foaming agent, and 70-90 parts by weight of water. The enhancer, water reducing agent, modified starch and foaming agent in the present application are all commonly used in the field. According to the invention, the enhancer is polymer fiber or mineral fiber; the water reducing agent is a naphthalene water reducing agent, and the foaming agent may be sodium dodecyl sulfate; the water may be neutral common tap water or underground water.

Modified starch is a kind of starch derivative generated from natural starch which is subject to proper chemical treatment and into which some chemical groups are introduced so as to change the molecular structure and physical and chemical properties. After gelatinization, the modified starch migrates to the interface between the cover papers and the gypsum board, so that the cover papers and the gypsum board are firmly bonded together. The modified starch adopted in the example of the present invention is modified corn starch or tapioca modified starch with the gelatinization temperature of 70-75 °C and the alkaline fluidity of 14-20 seconds.

A preparation method of a paper-layered gypsum board for removing formaldehyde according to an example of the present invention mainly includes the following steps: mechanically stirring predetermined parts by weight of calcined gypsum powder, an agent for removing formaldehyde, an enhancer, a water reducing agent, and modified starch, and feeding into a mixer; adding a predetermined part by weight of a foaming agent to water, and feeding the mixed solution into the mixer after being foamed by a foaming system; thoroughly stirring raw materials by the mixer to obtain a uniform slurry, continuously pouring between the two layers of cover papers, and extrusion molding to obtain a wet gypsum board; and solidifying, cutting, drying and sawing the wet gypsum board to obtain the paper-layered gypsum board for removing formaldehyde.

The paper-layered gypsum board for removing formaldehyde adopting the technical solutions of examples of the present invention is obviously superior to the prior art products in terms of the long-term formaldehyde-removing effect and mechanical properties.

### Preferred Examples of the Present Invention

The following clearly and completely describes the technical solutions in the present invention with reference to examples of the present invention. Apparently, the described examples are merely a part rather than all of the examples of the present invention. It should be noted that the following examples of the present invention and the features of the examples may randomly combine with each other without confliction.

In an example of the present invention, a paper-layered gypsum board for removing formaldehyde includes two layers of cover papers and a gypsum board between the two layers of cover papers; wherein for 100 parts by weight of calcined gypsum powder, the gypsum board includes 2-10 parts by weight of an agent for removing formaldehyde.

A preparation method of the agent for removing formaldehyde includes following steps of: adding 15 parts by weight of coal powder and 8 parts by weight of polymeric amines into 15 parts by weight of silica sol, and stirring and mixing; and heating to 55°C, adding 15 parts by weight of polypeptide and 10 parts by weight of polytetrafluoroethylene emulsion, adjusting pH to a value of 8.0, and stirring for 20 min at 1800 r/min to obtain the agent for removing formaldehyde.

The polypeptide is a composition of antimicrobial peptide and casein phosphopeptide, and the weight ratio of the antimicrobial peptide to the casein phosphopeptide is 1: 4 to 1: 2, preferably, the weight ratio is 1: 3.

The paper-layered gypsum board for removing formaldehyde further includes 0.02-1 part by weight of modified starch, 0-1 part by weight of an enhancer, 0-2.5 parts by weight of a water reducing agent, 0.01-1 parts by weight of a foaming agent, and 70-90 parts by weight of water.

Specific examples of the components and their contents of the paper-layered gypsum board for removing formaldehyde are listed below.

### Example

A paper-layered gypsum board for removing formaldehyde is prepared by: mechanically stirring 100 parts by weight of calcined gypsum powder, 2-10 parts by weight of an agent for removing formaldehyde, 0-1 part by weight of an enhancer, 0-2.5 parts by weight of a water reducing agent, and 0.02-1 part by weight of modified starch, and feeding into a mixer; adding 0.01-1 part by weight of a foaming agent to 70-90 parts by weight of water, and feeding the mixed solution into the mixer after being foamed by a foaming system; thoroughly stirring raw materials by the mixer to obtain a uniform slurry, continuously pouring between the two layers of cover papers, and extrusion molding to obtain a wet gypsum board; and solidifying, cutting, drying and sawing the wet gypsum board to obtain the gypsum board for removing formaldehyde.

Table 1 lists some example data of the present invention. It should be noted that the data in Table 1 are part of the data selected during the experimental process, and the examples of the present invention are not limited to the following data.

**Table 1 Example of Formulas of Paper-Faced Gypsum Board for Removing Formaldehyde**

| | Example | Example | Example | Example | Example | Example | Example |
|---|---|---|---|---|---|---|---|
| | 1 | 2 | 3 | 4 | 5 | 6 | 7 |
| Calcined Gypsum Powder | 100 | 100 | 100 | 100 | 100 | 100 | 100 |
| Agent for Removing Formaldehyde | 2 | 3 | 4.5 | 5 | 8 | 6.5 | 10 |
| Enhancer | 0 | 0.3 | 0.6 | 0.7 | 0 | 0.5 | 1 |
| Water Reducing Agent | 0 | 2 | 1.5 | 1 | 1.5 | 0.8 | 2.5 |
| Modified Starch | 0.02 | 0.1 | 0.5 | 0.6 | 1 | 0.8 | 0.7 |
| Foaming Agent | 0.01 | 0.3 | 0.5 | 0.6 | 0.8 | 0.2 | 1 |
| Water | 90 | 80 | 78 | 75 | 72 | 80 | 70 |

### Test

### Test 1

The specific components and weight ratio of polypeptide are screened by experiments. Formaldehyde is previously dropped into a 1 m³ closed chamber, in which the initial formaldehyde concentration is measured to be 2 mg/m³, a 9.5 mm thick gypsum board with 0.5 m length and width is placed respectively, the change of formaldehyde concentration in the chamber is respectively detected over time. The parts by weight of antimicrobial peptide and casein phosphopeptide in the specific polypeptide are shown in Table 2.

**Table 2 List of Parts by Weight of Specific Components of Polypeptide**

| | 1 | 2 | 3 | 4 | 5 | 6 | 7 |
|---|---|---|---|---|---|---|---|
| Antimicrobial Peptide | 2.4 | 1.8 | 1.2 | 0.6 | 0.8 | 0.5 | 0 |
| Casein Phosphopeptide | 0 | 0.6 | 1.2 | 1.8 | 1.6 | 1.9 | 2.4 |
| 24h Formaldehyde Concentration (mg/m³) | 1.95 | 1.93 | 1.90 | 1.82 | 1.85 | 1.86 | 1.90 |
| 48h Formaldehyde Concentration (mg/m³) | 1.91 | 1.90 | 1.86 | 1.70 | 1.73 | 1.78 | 1.83 |

Through the test in Table 2, it can be seen that antimicrobial peptide and casein phosphopeptide with different weight ratios can degrade formaldehyde in a short time and reduce the concentration of formaldehyde; wherein the effect of antimicrobial peptide and casein phosphopeptide with the weight ratio of 4 to 6 is preferred, and it is most preferred that the antimicrobial peptide and casein phosphopeptide is 1: 3, which has the best formaldehyde-removing effect. The mechanical properties (refer to standard GB/T9775-2008) of 1-7 gypsum boards are measured at the same time. The mechanical properties of 1-7 gypsum boards all reached the national standard.

### Test 2

The following is a test analysis of the formaldehyde-removing effect of a paperlayered gypsum board for removing formaldehyde in each example. In a 1 m³ chamber, the addition amount of formaldehyde is 3 µL. Formaldehyde is continuously dropped each day, and a 9.5 mm thick gypsum board with the length and width of 0.5 m is placed. The formaldehyde concentration in the chamber within 1-10 days is separately measured. The specific data are shown in Table 3. The data unit in Table 3 is mg/m³.

**Table 3 Formaldehyde-Removing Effect of Gypsum Board in Each Example**

| | 1d | 2d | 3d | 4d | 6d | 8d | 10d |
|---|---|---|---|---|---|---|---|
| Blank Test | 0.59 | 0.56 | 0.59 | 0.57 | 0.53 | 0.55 | 0.58 |
| Example 1 | 0.08 | 0.06 | 0.08 | 0.07 | 0.08 | 0.08 | 0.07 |
| Example 2 | 0.05 | 0.06 | 0.06 | 0.06 | 0.05 | 0.07 | 0.06 |
| Example 3 | 0.02 | 0.01 | 0.02 | 0.01 | 0.02 | 0.01 | 0.02 |
| Example 4 | 0.06 | 0.05 | 0.07 | 0.08 | 0.07 | 0.09 | 0.08 |
| Example 5 | 0.01 | 0.02 | 0.03 | 0.02 | 0.02 | 0.03 | 0.02 |
| Example 6 | 0.05 | 0.05 | 0.04 | 0.07 | 0.06 | 0.05 | 0.06 |
| Example 7 | 0.03 | 0.04 | 0.06 | 0.05 | 0.03 | 0.05 | 0.04 |

From the data in Table 3, it can be seen that the paper-layered gypsum board for removing formaldehyde in each example can quickly absorb and degrade the indoor formaldehyde within 1 day, and the 24 hours efficiency rate is as high as 90% or more. Moreover, with the continuous dropping of formaldehyde, the formaldehyde-removing effect of the paper-layered gypsum board for removing formaldehyde can be maintained for a long time; the larger the parts by weight of the added agent for removing formaldehyde, the more significant the formaldehyde-removing effect, but the mechanical properties would be slightly reduced. In Examples 3-6, the average value of longitudinal breaking load is above 440.8N and the average value of transverse breaking load is above 201.3N, which shows very excellent mechanical properties. The formaldehyde-removing effect of the paper-layered gypsum board for removing formaldehyde in Example 1 can already meet the requirement for removing daily indoor formaldehyde.

To sum up, the present invention relates to a paper-layered gypsum board for removing formaldehyde. By addition of a special agent for removing formaldehyde to the formula, the gypsum board can effectively capture and quickly and effectively adsorb indoor formaldehyde. Then formaldehyde is degraded. Thus, the paper-layered gypsum board for removing formaldehyde effectively reduces the indoor formaldehyde concentration, maintains a formaldehyde-removing effect for a long term, makes effective degradation last up to 30-40 years, while also has excellent mechanical properties, and has the mechanical properties unaffected during a long-term process for removing formaldehyde.

Finally, it should be noted that in this disclosure, the terminology "include", "including" or any other variant is intended to cover non-exclusive inclusion, so that a process, a method, an object or a device that includes a series of elements not only includes those elements, but also includes other elements that are not explicitly listed, or includes inherent elements of the process, method, object or device. Without more limitations, an element modified by "include one..." does not exclude that the process, method, object, or device that includes the element includes another identical element.

The foregoing examples are merely intended for describing the technical solutions of the present invention rather than limiting the present invention.

Finally, it should be noted that the above examples are merely provided for describing rather than limiting the technical schemes of the present invention.

### Industrial Applicability

According to the present invention, by addition of a special agent for removing formaldehyde to the formula, the gypsum board can effectively reduce the indoor formaldehyde concentration and maintain a formaldehyde-removing effect for a long time, and the paperlayered gypsum board for removing formaldehyde also has excellent mechanical properties.

## Claims

1. A paper-layered gypsum board for removing formaldehyde, comprising two layers of cover papers and a gypsum board between the two layers of cover papers; wherein for 100 parts by weight of calcined gypsum powder, the paper-layered gypsum board comprises 2-10 parts by weight of an agent for removing formaldehyde;
wherein the agent for removing formaldehyde is prepared by the following steps of: adding 10-20 parts by weight of coal powder and 5-10 parts by weight of polymeric amines into 15-25 parts by weight of silica sol, and stirring and mixing; and heating to 40-60°C, adding 15-20 parts by weight of polypeptide and 10-15 parts by weight of polytetrafluoroethylene emulsion, adjusting pH to a value of 7.5-8.0, and stirring for 10-20 min at 1800 r/min to obtain the agent for removing formaldehyde, and wherein the polypeptide comprises one or more of antimicrobial peptide and casein phosphopeptide; and the polymeric amines comprise one or more of polyallylamine, dendritic polyamide and hyperbranched polyamide.

2. The paper-layered gypsum board for removing formaldehyde according to claim 1, wherein the polypeptide is a composition of antimicrobial peptide and casein phosphopeptide, and the weight ratio of the antimicrobial peptide to the casein phosphopeptide is 1: 4 to 1: 2.

3. The paper-layered gypsum board for removing formaldehyde according to claim 2, wherein the weight ratio of the antimicrobial peptide to the casein phosphopeptide is 1: 3.

4. The paper-layered gypsum board for removing formaldehyde according to claim 1, wherein for 100 parts by weight of calcined gypsum powder, the paper-faced gypsum board further comprises the following components: enhancer, wherein the enhancer is polymer fiber or mineral fiber
| | |
|---|---|
| | 0-1 part by weight; |
| water reducing agent | 0-2.5 parts by weight; |
| modified starch | 0.02-1 part by weight; |
| foaming agent | 0.01-1 part by weight; |
| water | 70-90 parts by weight. |

5. The paper-layered gypsum board for removing formaldehyde according to claim 4, further comprising following components, wherein content of each component is:
| | |
|---|---|
| calcined gypsum powder | 100 parts by weight; |
| agent for removing formaldehyde | 4.5 parts by weight; |
enhancer, wherein the enhancer is polymer fiber or mineral fiber
| | |
|---|---|
| | 0.6 part by weight; |
| water reducing agent | 1.5 parts by weight; |
| modified starch | 0.5 part by weight; |
| foaming agent | 0.5 part by weight; |
| water | 78 parts by weight. |

6. The paper-layered gypsum board for removing formaldehyde according to claim 4, further comprising following components, wherein content of each component is:
| | |
|---|---|
| calcined gypsum powder | 100 parts by weight; |
| agent for removing formaldehyde | 8 parts by weight; |
| water reducing agent | 1.5 parts by weight; |
| modified starch | 1 part by weight; |
| foaming agent | 0.8 part by weight; |
| water | 72 parts by weight. |

7. A preparation method for a paper-layered gypsum board for removing formaldehyde, comprising the steps of:
mechanically stirring predetermined parts by weight of calcined gypsum powder, an agent for removing formaldehyde, an enhancer, wherein the enhancer is polymer fiber or mineral fiber, a water reducing agent, and modified starch, and
feeding into a mixer; adding a predetermined part by weight of a foaming agent to water, and feeding the mixed solution into the mixer after being foamed by a foaming system; thoroughly stirring raw materials by the mixer to obtain a uniform slurry, continuously pouring between the two layers of cover papers, and extrusion molding to obtain a wet gypsum board; and solidifying, cutting, drying and sawing the wet gypsum board to obtain the paper-layered gypsum board for removing formaldehyde,
wherein the agent for removing formaldehyde is prepared by the following steps of: adding 10-20 parts by weight of coal powder and 5-10 parts by weight of polymeric amines into 15-25 parts by weight of silica sol, and stirring and mixing; and heating to 40-60°C, adding 15-20 parts by weight of polypeptide and 10-15 parts by weight of polytetrafluoroethylene emulsion, adjusting pH to a value of 7.5-8.0, and stirring for 10-20 min at 1800 r/min to obtain the agent for removing formaldehyde, and wherein the polypeptide comprises one or more of antimicrobial peptide and casein phosphopeptide; and the polymeric amines comprise one or more of polyallylamine, dendritic polyamide and hyperbranched polyamide.

## Patentansprüche

1. Eine papierbeschichtete Gipsplatte zum Entfernen von Formaldehyd, beinhaltend zwei Schichten Deckpapier und eine Gipsplatte zwischen den zwei Schichten Deckpapier; wobei die papierbeschichtete Gipsplatte pro 100 Gewichtsteilen kalzinierten Gipspulvers 2-10 Gewichtsteile eines Mittels zum Entfernen von Formaldehyd beinhaltet;
wobei das Mittel zum Entfernen von Formaldehyd durch die folgenden Schritte hergestellt wird: Zugeben von 10-20 Gewichtsteilen Kohlepulver und 5-10 Gewichtsteilen polymerer Amine zu 15-25 Gewichtsteilen Kieselsol und Rühren und Mischen; und Erwärmen auf 40-60 °C, Zugeben von 15-20 Gewichtsteilen Polypeptid und 10-15 Gewichtsteilen Polytetrafluorethylenemulsion, Einstellen des pH-Werts auf einen Wert von 7,5-8,0 und Rühren für 10-20 min bei 1800 U/min, um das Mittel zum Entfernen von Formaldehyd zu erhalten, und wobei das Polypeptid eines oder mehrere von antimikrobiellem Peptid und Caseinphosphopeptid beinhaltet; und die polymeren Amine eines oder mehrere von Polyallylamin, dendritischem Polyamid und hyperverzweigtem Polyamid beinhalten.

2. Papierbeschichtete Gipsplatte zum Entfernen von Formaldehyd gemäß Anspruch 1, wobei das Polypeptid eine Zusammensetzung von antimikrobiellem Peptid und Caseinphosphopeptid ist und das Gewichtsverhältnis des antimikrobiellen Peptids zu dem Caseinphosphopeptid 1 : 4 bis 1 : 2 beträgt.

3. Papierbeschichtete Gipsplatte zum Entfernen von Formaldehyd gemäß Anspruch 2, wobei das Gewichtsverhältnis des antimikrobiellen Peptids zu dem Caseinphosphopeptid 1 : 3 beträgt.

4. Papierbeschichtete Gipsplatte zum Entfernen von Formaldehyd gemäß Anspruch 1, wobei die papierverschalte Gipsplatte pro 100 Gewichtsteilen kalzinierten Gipspulvers ferner die folgenden Komponenten beinhaltet:
| | |
|---|---|
| Verstärker, wobei der Verstärker | 0-1 Gewichtsteile; |
| Polymerfaser oder Mineralfaser ist | |
| Verflüssiger | 0-2,5 Gewichtsteile; |
| modifizierte Stärke | 0,02-1 Gewichtsteile; |
| Schaumbildner | 0,01-1 Gewichtsteile; |
| Wasser | 70-90 Gewichtsteile. |

5. Papierbeschichtete Gipsplatte zum Entfernen von Formaldehyd gemäß Anspruch 4, ferner beinhaltend die folgenden Komponenten, wobei der Gehalt jeder Komponente wie folgt ist:
| | |
|---|---|
| kalziniertes Gipspulver | 100 Gewichtsteile; |
| Mittel zum Entfernen von Formaldehyd | 4,5 Gewichtsteile; |
| Verstärker, wobei der Verstärker | 0,6 Gewichtsteile; |
Polymerfaser oder Mineralfaser ist
| | |
|---|---|
| Verflüssiger | 1,5 Gewichtsteile; |
| modifizierte Stärke | 0,5 Gewichtsteile; |
| Schaumbildner | 0,5 Gewichtsteile; |
| Wasser | 78 Gewichtsteile. |

6. Papierbeschichtete Gipsplatte zum Entfernen von Formaldehyd gemäß Anspruch 4, ferner beinhaltend die folgenden Komponenten, wobei der Gehalt jeder Komponente wie folgt ist:
| | |
|---|---|
| kalziniertes Gipspulver | 100 Gewichtsteile; |
| Mittel zum Entfernen von Formaldehyd | 8 Gewichtsteile; |
| Verflüssiger | 1,5 Gewichtsteile; |
| modifizierte Stärke | 1 Gewichtsteil; |
| Schaumbildner | 0,8 Gewichtsteile; |
| Wasser | 72 Gewichtsteile. |

7. Ein Herstellungsverfahren für eine papierbeschichtete Gipsplatte zum Entfernen von Formaldehyd, beinhaltend die folgenden Schritte:
mechanisches Rühren vorgegebener Gewichtsteile von kalziniertem Gipspulver, einem Mittel zum Entfernen von Formaldehyd, einem Verstärker, wobei der Verstärker Polymerfaser oder Mineralfaser ist, einem Verflüssiger und modifizierter Stärke, und Einspeisen in einen Mischer; Zugeben eines vorgegebenen Gewichtsteils eines Schaumbildners zu Wasser und Einspeisen der gemischten Lösung in den Mischer nach dem Aufschäumen durch ein Aufschäumsystem; gründliches Rühren der Rohmaterialen durch den Mischer, um eine einheitliche Aufschlämmung zu erhalten, kontinuierliches Gießen zwischen die zwei Schichten Deckpapier und Extrusionsformen, um eine nasse Gipsplatte zu erhalten; und Verfestigen, Schneiden, Trocknen und Sägen der nassen Gipsplatte, um die papierbeschichtete Gipsplatte zum Entfernen von Formaldehyd zu erhalten,
wobei das Mittel zum Entfernen von Formaldehyd durch die folgenden Schritte hergestellt wird: Zugeben von 10-20 Gewichtsteilen Kohlepulver und 5-10 Gewichtsteilen polymerer Amine zu 15-25 Gewichtsteilen Kieselsol und Rühren und Mischen; und Erwärmen auf 40-60 °C, Zugeben von 15-20 Gewichtsteilen Polypeptid und 10-15 Gewichtsteilen Polytetrafluorethylenemulsion, Einstellen des pH-Werts auf einen Wert von 7,5-8,0 und Rühren für 10-20 min bei 1800 U/min, um das Mittel zum Entfernen von Formaldehyd zu erhalten, und wobei das Polypeptid eines oder mehrere von antimikrobiellem Peptid und Caseinphosphopeptid beinhaltet; und die polymeren Amine eines oder mehrere von Polyallylamin, dendritischem Polyamid und hyperverzweigtem Polyamid beinhalten.

## Revendications

1. Une plaque de plâtre à couches de papier pour éliminer du formaldéhyde, comprenant deux couches de papiers de couverture et une plaque de plâtre entre les deux couches de papiers de couverture ; où pour 100 parties en poids de poudre de plâtre calciné, la plaque de plâtre à couches de papier comprend de 2 à 10 parties en poids d'un agent pour éliminer du formaldéhyde ;
où l'agent pour éliminer du formaldéhyde est préparé par les étapes suivantes : ajouter de 10 à 20 parties en poids de poudre de charbon et de 5 à 10 parties en poids d'amines polymériques dans de 15 à 25 parties en poids de sol de silice, et agiter et mélanger ; et chauffer jusqu'à de 40 à 60 °C, ajouter de 15 à 20 parties en poids de polypeptide et de 10 à 15 parties en poids d'émulsion de polytétrafluoroéthylène, régler le pH à une valeur de 7,5 à 8,0, et agiter pendant de 10 à 20 min à 1 800 tr/min afin d'obtenir l'agent pour éliminer du formaldéhyde, et où le polypeptide comprend un ou plusieurs éléments parmi du peptide antimicrobien et du phosphopeptide caséine ; et les amines polymériques comprennent un ou plusieurs éléments parmi du polyallylamine, du polyamide dendritique et du polyamide hyper-ramifié.

2. La plaque de plâtre à couches de papier pour éliminer du formaldéhyde selon la revendication 1, où le polypeptide est une composition de peptide antimicrobien et de phosphopeptide caséine, et le rapport en poids du peptide antimicrobien au phosphopeptide caséine est de 1/ 4 à 1/ 2.

3. La plaque de plâtre à couches de papier pour éliminer du formaldéhyde selon la revendication 2, où le rapport en poids du peptide antimicrobien au phosphopeptide caséine est de 1/ 3.

4. La plaque de plâtre à couches de papier pour éliminer du formaldéhyde selon la revendication 1, où pour 100 parties en poids de poudre de plâtre calciné, la plaque de plâtre à face de papier comprend en outre les constituants suivants :
matériau de renfort, le matériau de renfort de 0 à 1 partie en poids ;
étant de la fibre de polymère ou de la fibre
minérale
| | |
|---|---|
| agent réducteur d'eau | de 0 à 2,5 parties en poids ; |
| amidon modifié | de 0,02 à 1 partie en poids ; |
| agent moussant | de 0,01 à 1 partie en poids ; |
| eau | de 70 à 90 parties en poids. |

5. La plaque de plâtre à couches de papier pour éliminer du formaldéhyde selon la revendication 4, comprenant en outre les constituants suivants, où la teneur en chaque constituant est :
| | |
|---|---|
| poudre de plâtre calciné | 100 parties en poids ; |
| agent pour éliminer du formaldéhyde | 4,5 parties en poids ; |
| matériau de renfort, le matériau de renfort | 0,6 partie en poids ; |
| étant de la fibre de polymère ou de la fibre minérale | |
| agent réducteur d'eau | 1,5 partie en poids ; |
| amidon modifié | 0,5 partie en poids ; |
| agent moussant | 0,5 partie en poids ; |
| eau | 78 parties en poids. |

6. La plaque de plâtre à couches de papier pour éliminer du formaldéhyde selon la revendication 4, comprenant en outre les constituants suivants, où la teneur en chaque constituant est :
| | |
|---|---|
| poudre de plâtre calciné | 100 parties en poids ; |
| agent pour éliminer du formaldéhyde | 8 parties en poids ; |
| agent réducteur d'eau | 1,5 partie en poids ; |
| amidon modifié | 1 partie en poids ; |
| agent moussant | 0,8 partie en poids ; |
| eau | 72 parties en poids. |

7. Un procédé de préparation pour une plaque de plâtre à couches de papier pour éliminer du formaldéhyde, comprenant les étapes :
agiter mécaniquement des parties en poids prédéterminées de poudre de plâtre calciné, un agent pour éliminer du formaldéhyde, un matériau de renfort, le matériau de renfort étant de la fibre de polymère ou de la fibre minérale, un agent réducteur d'eau, et de l'amidon modifié, et
introduire dans un mélangeur ; ajouter une partie en poids prédéterminée d'un agent moussant à de l'eau, et introduire la solution mélangée dans le mélangeur après qu'elle a été moussée par un système de moussage ; agiter soigneusement des matériaux bruts au moyen du mélangeur afin d'obtenir une bouillie épaisse uniforme, verser en continu entre les deux couches de papiers de couverture, et mouler par extrusion afin d'obtenir une plaque de plâtre mouillée ; et solidifier, découper, sécher et scier la plaque de plâtre mouillée afin d'obtenir la plaque de plâtre à couches de papier pour éliminer du formaldéhyde,
où l'agent pour éliminer du formaldéhyde est préparé par les étapes suivantes : ajouter de 10 à 20 parties en poids de poudre de charbon et de 5 à 10 parties en poids d'amines polymériques dans de 15 à 25 parties en poids de sol de silice, et agiter et mélanger ; et chauffer jusqu'à de 40 à 60 °C, ajouter de 15 à 20 parties en poids de polypeptide et de 10 à 15 parties en poids d'émulsion de polytétrafluoroéthylène, régler le pH à une valeur de 7,5 à 8,0, et agiter pendant de 10 à 20 min à 1 800 tr/min afin d'obtenir l'agent pour éliminer du formaldéhyde, et où le polypeptide comprend un ou plusieurs éléments parmi du peptide antimicrobien et du phosphopeptide caséine ; et les amines polymériques comprennent un ou plusieurs éléments parmi du polyallylamine, du polyamide dendritique et du polyamide hyper-ramifié.
